# EUROPEAN PATENT APPLICATION

(11) **EP 2 413 570 A1**
(43) Date of publication of application: **01.02.2012**
(21) Application number: 10755985.8
(22) Date of filing: 15.03.2010
(51) Int. Cl.: H04M 1/00, H04W 12/02, H04W 84/12, H04W 88/06

(54) **COMMUNICATION TERMINAL CONTROL SYSTEM**

(30) Priority: 26.03.2009 JP 2009077853
(71) Applicant: NEC Corporation, Tokyo 108-8001 (JP)
(72) Inventor: KIKKAWA, Yasushi, Tokyo 108-8001 (JP)
(74) Representative: Wenzel & Kalkoff
(86) International application number: PCT/JP2010/054751
(87) International publication number: WO 2010/110188

(57) **Abstract**

The present invention makes it possible to perform the setting, editing and browsing of various data on a mobile phone from an external device. A mobile phone is equipped with a wireless communication function and a web browser function. When the wireless communication function of the mobile phone has been accessed from a personal computer (PC) via wireless communication, the web browser function of the mobile phone is launched, and menus are displayed on a browser screen. Accordingly, a menu displayed on a browser screen can be selectively displayed, and a setting change or an editing of desired information can be performed, both from the PC. Further, the menu displayed on a browser screen can be browsed from the PC.

## Description

### Technical field

This invention relates to a mobile phone control system wherein a communication terminal such as a mobile phone is remotely operated from an external device.

### Background art

In conventional mobile phones, various settings and addition, deletion, editing and the like of stored data can be performed by executing the operations in the mobile phones. Further, the addition, deletion, editing and the like of the stored data in a mobile phone can be performed from a personal computer (hereinafter, referred to as PC), by connecting the mobile phone and the PC to each other by the use of a connecting cable, installing the software in the PC and setting a mobile phone function there.

For example, a related technology has been disclosed, wherein a mobile terminal and a PC are connected to each other by the use of a cable, and the image data, music data and the like stored in the mobile terminal can be browsed and edited from the PC (refer to patent document 1). Another related technology has also been disclosed, wherein various kinds of settings of a mobile terminal are performed by sending the setting information in the form of a mail to the mobile terminal by the use of a browser at the PC (refer to patent document 2, for example). Further, another technology has been disclosed, wherein various kinds of settings of a mobile terminal are performed from an administration terminal, by connecting the administration terminal on the administrator side and the mobile terminal on the user side to each other via the internet (refer to patent document 3, for example).

### Prior art documents

### Patent documents

[Patent document 1] Japanese Patent Application Laid-Open No. 2004-208052.
[Patent document 2] Japanese Patent Application Laid-Open No. 2004-297526.
[Patent document 3] Japanese Patent Application Laid-Open No. 2008-186304.

### Disclosure of invention

### Problem to be solved

However, in the technology disclosed in patent document 1 described above, it is necessary to prepare a PC installed with the software for controlling a mobile phone, and to perform various controls from the PC. That is, it is necessary to install in the PC the software which is dedicated to the control of a mobile phone performed by accessing the memories in the mobile phone from the PC, and this consequently has posed a problem that the task for it is troublesome.

Further, the technology of the above-mentioned patent document 2 requires an intervention of a setting server between a PC and a mobile terminal. Furthermore, the technology of the above-mentioned patent document 3 has a problem that it is necessary to prepare special devices, dedicated control software or the like for management, separately.

The present invention has been achieved in view of the above-described situation, and is intended to provide a mobile phone control system wherein the operations of setting, editing and browsing of various data can be applied to a mobile phone from an external device, without preparing dedicated control software.

### Means for solving the problem

In order to achieve the above-mentioned object, a mobile phone control system of the present invention includes a mobile phone equipped with a wireless communication function and a web browser function, and an external device which accesses the mobile phone via the wireless communication function, makes the mobile phone launch the web browser function, and controls the information displayed on a browser screen of the mobile phone.

Further, a mobile phone of the present invention is equipped with a wireless communication function and a web browser function, and is configured so as to launch the web browser function accessed from an external device via wireless communication.

Further, a method for operating a mobile phone of the present invention includes;
the first step of an external computer accessing a mobile phone equipped with a wireless communication function and a web browser function,
the second step of the mobile phone launching the web browser function and thereby displaying information on a browser screen, and
the third step of the external computer controlling the information displayed on the browser screen.

### Effect of the invention

According to the configuration of the present invention, the information within a mobile phone can be browsed from an external device via a wireless communication function without preparing dedicated control software. Additionally, modification and editing of a menu can be performed from the external device as necessary.

### BRIEF DESCRIPTION OF DRAWINGS

[Fig. 1] is a block diagram showing the configuration of a mobile phone control system which is the first exemplary embodiment of this invention.
[Fig. 2] is a block diagram showing the internal configuration of a mobile phone constituting a mobile phone control system which is the first exemplary embodiment of this invention.
[Fig. 3] is a diagram showing an example of a web browser screen displayed by a web browser function of a mobile phone constituting a mobile phone control system which is the first exemplary embodiment of this invention.
[Fig. 4] is a block diagram showing a configuration of a mobile phone control system which is the second exemplary embodiment of this invention.

### Exemplary embodiment

In a mobile phone control system of the present invention, a mobile phone equipped with a WLAN (Wireless Local Area Network) function and a web browser function is utilized, and thereby the telephone functions in the mobile phone can be set via WLAN with the intervention of the web browser function. Further, the mobile phone control system of this invention is configured so as to be capable of adding, deleting and editing the data stored in the mobile phone.

In other words, it is configured so as to utilize a mobile phone equipped with a WLAN function and a web browser function, thereby making it possible to access the mobile phone from a PC via WLAN. In this way, it is possible to make the mobile phone display the setting information and information stored in the memories in the mobile phone on a web browser, and also to reflect the content set in the web browser from the PC, which is an external device, into the mobile phone.

### (The first exemplary embodiment)

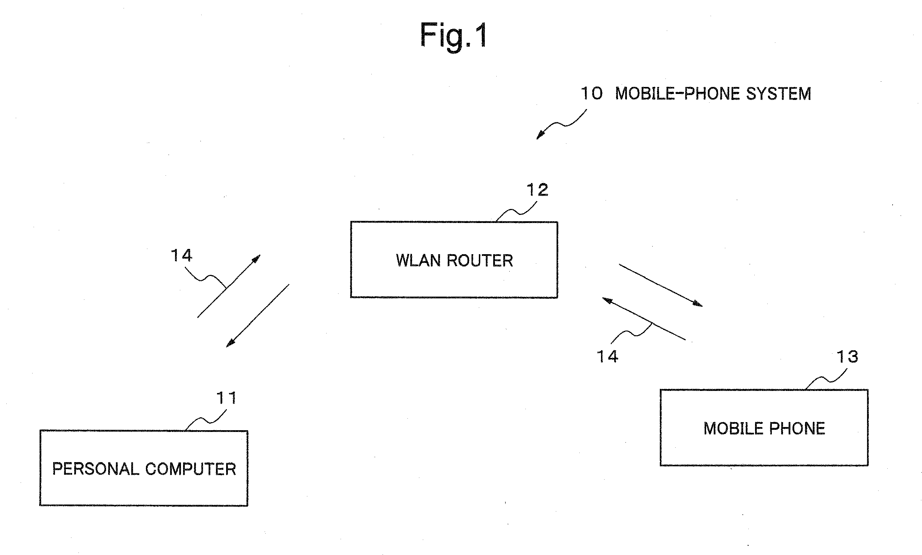

In the following, the first embodiment of the present invention will be described in detail with reference to the drawings. Fig. 1 is a block diagram showing the configuration of a mobile phone control system which is the first embodiment of the present invention. A mobile phone control system 10 of this embodiment includes a PC 11, WLAN router 12 and a mobile phone 13. Here, the PC 11 is a PC connected to a WLAN 14 as an external device, and the WLAN router 12 is a WLAN router as a relay device of the WLAN 14. Further, the mobile phone 13 is a mobile phone equipped with a WLAN function and a web browser function, and the WLAN 14 is a WLAN connecting these respective elements.

Next, operation of the mobile phone control system 10 having the above-mentioned configuration will be described generally. The PC 11 and the WLAN router 12 are connected to a network via the WLAN 14. The mobile phone 13 and the WLAN router 12 are also connected to the network via the WLAN 14. Accordingly, the PC 11 can access and control the mobile phone 13 via the WLAN 14 with the intervention of the WLAN router 12.

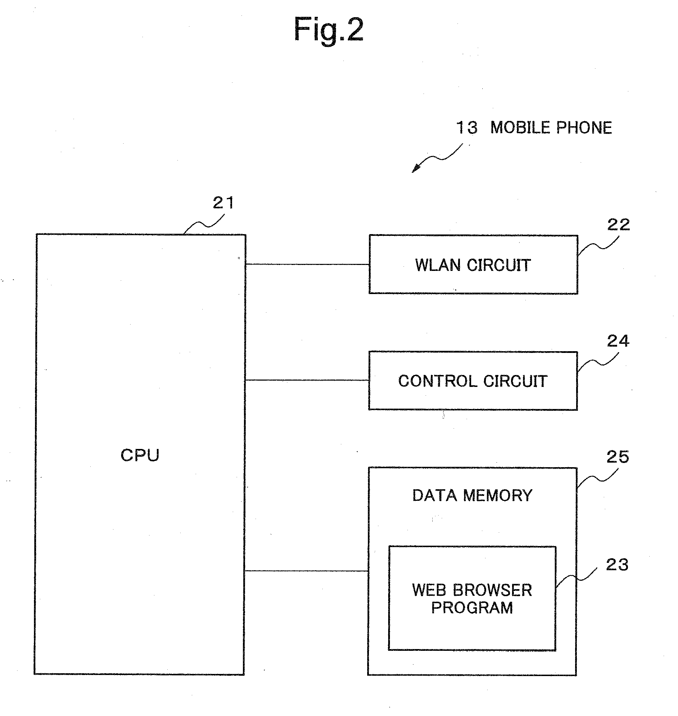

Fig. 2 is a block diagram showing the internal configuration of the mobile phone 13 presented in Fig. 1. This mobile phone 13 comprises a CPU (Central Processing Unit) 21, which is a control processor, and a WLAN circuit 22 for realizing the function of WLAN. This mobile phone 13 further comprises a web browser program 23 having a web browser function, a control circuit 24 performing the control and setting of the mobile phone 13, and a data memory 25 storing various kinds of data. Here, the web browser program 23 is launched when there has been an access from an external PC via the WLAN, and has a function to send to and receive from the external PC the data including a setting screen and setting information of the mobile phone. It thereby has a function to display the setting screen of the mobile phone on a web browser screen of the mobile phone and also that of the external PC, allowing the manipulation of setting information.

The functions of respective components of the mobile phone 13 shown in Fig. 2 will be described in more detail below. The CPU 21 is a processor for performing various kinds of control in the mobile phone 13. The WLAN circuit 22 has a function to exchange data in the local area between the PC 11 and the mobile phone 13 by means of wireless communication. The web browser program 23 is launched when the PC 11 has accessed the mobile phone 13 via the WLAN 14, and displays the setting screen of the mobile phone on a web browser screen of the mobile phone 13 and also on that of the PC 11. That is, when the mobile phone 13 has been accessed from the PC 11, the web browser program 23 creates the state wherein the data or the like of the mobile phone 13 is viewable from the PC 11.

The control circuit 24 has a function to perform various settings of the mobile phone 13 equipped with the WLAN circuit 22. The data memory 25 stores various data of a telephone book, memo pad and schedule function and the like of the mobile phone 13. The web browser program 23 is also stored in this data memory 25.

Next, the operation of the mobile phone 13 will be described with reference to Figs. 1 and 2. First, the PC 11 accesses the mobile phone 13 via the WLAN 14 with the intervention of the WLAN router 12. When the WLAN circuit 22 of the mobile phone 13 has received the access information from the PC 11, the mobile phone 13 launches the Web browser program 23.

The data in the mobile phone 13 such as setting information and stored information in the memories is displayed on a web browser screen of the mobile phone 13 by the web browser program 23. At the same time, the web browser program 23 sends the data such as setting information and stored information in the memories to the PC 11 via the WLAN 14. In this way, the data such as setting information and stored information in the memories in the mobile phone 13 is displayed on a screen of the PC 11.

On the other hand, the content of the setting sent to the mobile phone 13 from the PC 11, which is an external device, is reflected in the mobile phone 13 by the web browser program 13.

That is, when the PC 11 has accessed the mobile phone 13 via the WLAN 14, the system enters the state wherein the data in the mobile phone 13 such as setting information and stored information in the memories can be viewed and manipulated at the PC 11.

Further, when the control circuit 24 has performed various settings of the mobile phone 13, the information about these settings is outputted to the PC 11 via the WLAN 14 with the intervention of the web browser program 23 of the mobile phone 23, and thereby the setting information of the mobile phone 13 becomes viewable from the PC 11. Further, various data of a telephone book, memo pad and schedule function and the like is accumulated in the data memory 25 of the mobile phone 13 as stored information. The system is also configured that these pieces of stored information can be output to the PC 11 via the WLAN 14 with the intervention of the web browser program 23. Accordingly, also the information stored in the data memory 25 of the mobile phone 13 can be browsed from the PC 11.

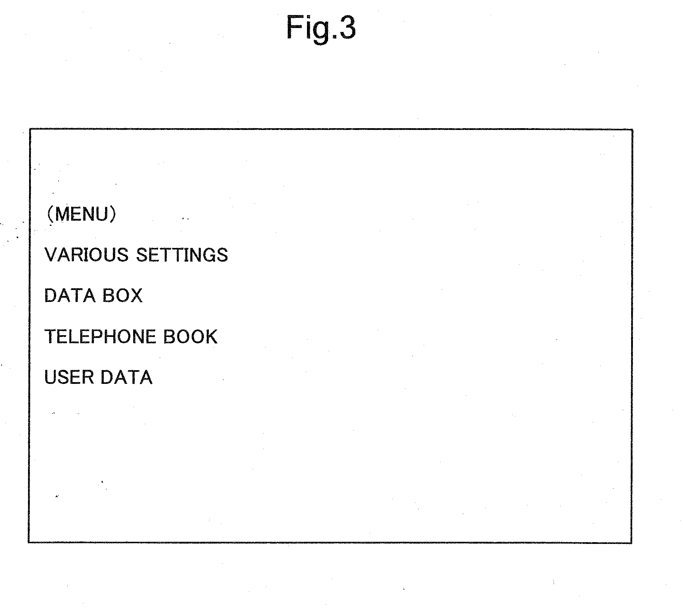

Fig. 3 is a diagram showing an example of a web browser screen displayed by the web browser program 23 of the mobile phone 13 presented in Fig. 2. When the mobile phone 13 has been accessed from the PC 11 via the WLAN 14, the web browser program 23 of the mobile phone 13 is launched. Thereby, menus such as shown in Fig. 3 are displayed on a web browser screen of each of the mobile phone 13 and the PC 11. The setting information, for example, the menus such as various settings, data box, telephone book and user data illustrated in Fig. 3 can be browsed from the PC 11 through a web browser screen.

As has been described above, according to this embodiment, the information within the mobile phone can be browsed at the PC 11 by accessing the mobile phone 13 by the use of a web browser which is normally provided in the PC 11.

In addition, modification and editing of a menu of the mobile phone 13 can be performed from the PC 11, as necessary. Because the web browser function is normally provided in conventional PCs, it becomes possible to perform various settings and editing on a mobile phone equipped with a WLAN function, with no need for the effort to install editing software and the like.

### (The second embodiment)

Next, the second embodiment will be described below.

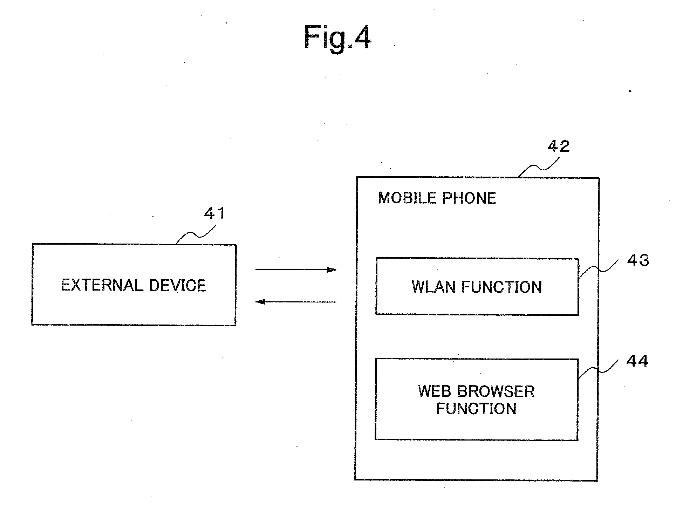

Fig. 4 is a block diagram showing the configuration of a mobile phone control system which is the second embodiment of the present invention. The mobile phone control system of the second embodiment includes a mobile phone 42 equipped with a WLAN function 43 and a web browser function 44, and an external device 41 for controlling the mobile phone 42.

According to this embodiment, when the mobile phone 42 has been accessed from the external device 41 via the WLAN function 43, the web browser function 44 is launched. Then, menus such as shown in Fig. 3 are displayed on a web browser screen of each of the mobile phone 42 and the external device 41. In the menus, for example, respective menus such as modification of settings and editing of telephone book in the mobile phone 42 are displayed. Then, when the menu selection is continued, the displayed screen is switched to various setting screens or an editing screen, and consequently the information in the mobile phone can be browsed by means of the external device 41.

In this way, according to this embodiment, it is possible to perform setting of various data, editing and browsing on a mobile phone from an external device equipped with a web browser function, without preparing dedicated control software.

It should be appreciated that any changes in the design or the like not departing from the spirit of the present invention are included in the present invention. One example of the changes may be such that the external device is a second mobile phone equipped with a WLAN function, and the information in the first mobile phone can be set, edited or deleted by accessing the first mobile phone equipped with a WLAN function from the second mobile phone.

### (The third embodiment)

The third exemplary embodiment of the present invention relates to a mobile-phone control system, and includes a mobile phone equipped with a WLAN function and a Web browser function, and an external device which accesses the mobile phone via a WLAN, makes the mobile phone launch the web browser function, and thereby controls the information displayed on a browser screen of the mobile phone.

### (The fourth embodiment)

The fourth embodiment of the present invention relates to a mobile phone, wherein the mobile phone is equipped with a WLAN function and a Web browser function, and launches the web browser function which has been accessed from an external device via a WLAN.

### (The fifth embodiment)

The fifth embodiment of this invention relates to a method for operating a mobile phone, wherein the operating method includes the first step of a PC accessing a mobile phone equipped with a WLAN function and a web browser function, the second step of the mobile phone launching the web browser function and the mobile phone can display information on a browser screen, and the third step of the PC controlling the information displayed on the browser screen.

The first to fifth embodiments described above can also solve the problem that the operations on conventional mobile phones are troublesome and time-consuming due to the fact that various operations are performed in the condition with limited screen size and limited keyboards.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2009-077853, filed on March 26, 2009, the disclosure of which is incorporated herein in its entirety by reference.

### Industrial Applicability

Because a mobile-phone control system according to the present information makes it possible to change the settings of or to browse the information of a mobile phone from a PC via a WLAN without preparing dedicated control software, the control system can be effectively utilized in the information exchange between a mobile phone and a PC at home or at the office.

### Description of symbols

10 mobile phone control system
11 personal computer (external computer)
12 WLAN router
13 mobile phone
14 WLAN
21 CPU
22 WLAN circuit
23 web browser program
24 control circuit
25 data memory

## Claims

1. A mobile phone control system including:
a mobile phone equipped with a wireless communication function and a web browser function; and
an external device for accessing said mobile phone via the wireless communication function, making said mobile phone launch said web browser function, and controlling the information displayed on a browser screen of said mobile phone.

2. The mobile phone control system according to claim 1, wherein said external device makes said mobile phone selectively display said information displayed on a browser screen.

3. The mobile phone control system according to claim 2, wherein said external device changes the settings of said information selectively displayed on a browser screen.

4. The mobile phone control system according to claim 2, wherein said external device edits said information selectively displayed on a browser screen.

5. The mobile phone control system according to any one of claims 1 to 4, wherein said wireless communication function is a WLAN.

6. The mobile phone control system according to any one of claims 1 to 5, wherein said external device is a personal computer.

7. A mobile phone equipped with a WLAN, wherein the mobile phone is equipped with a wireless communication function and a web browser function, and is configured so as to launch said web browser function accessed from an external device via the wireless communication function.

8. The mobile phone according to claim 7, wherein the information displayed on a browser screen is controlled by said external device, after said web browser function is launched.

9. The mobile phone according to claim 8, wherein said information displayed on a browser screen is selectively displayed by said external device.

10. The mobile phone according to claim 9, wherein said information selectively displayed on a browser screen undergoes a setting change by said external device.

11. The mobile phone according to claim 9, wherein said information selectively displayed on a browser screen is edited by said external device.

12. The mobile phone according to any one of claims 7 to 11, wherein said wireless communication function is a WLAN.

13. A method for operating a mobile phone, the method comprising:
a first step of an external computer accessing a mobile phone equipped with a wireless communication function and a web browser function;
a second step of said mobile phone launching said web browser function, and making said web browser function display information on a browser screen; and
a third step of said external computer controlling the information displayed on a browser screen.

14. The method for operating a mobile phone according to claim 13, wherein, in said third step, said external computer makes said mobile phone selectively display said information displayed on a browser screen.

15. The method for operating a mobile phone according to claim 14, wherein, in said third step, said external computer changes the settings of said information displayed on a browser screen.

16. The method for operating a mobile phone according to claim 14, wherein, in said third step, said external computer edits said information displayed on a browser screen.

17. The method for operating a mobile phone according to any one of claims 13 to 16, wherein said wireless communication function is a WLAN function.
